# EUROPEAN PATENT SPECIFICATION

(11) **EP 2 942 536 B1**
(45) Date of publication and mention of the grant of the patent: **07.09.2016**
(21) Application number: 15164483.8
(22) Date of filing: 21.04.2015
(51) Int. Cl.: F16C 3/10, F16C 3/20

(54) **INTERNAL COMBUSTION ENGINE AND STRADDLE-TYPE VEHICLE EQUIPPED WITH THE ENGINE**
VERBRENNUNGSMOTOR UND MIT DEM MOTOR AUSGESTATTETES SATTELFAHRZEUG
MOTEUR À COMBUSTION INTERNE ET VÉHICULE À ENFOURCHER ÉQUIPÉ DU MOTEUR

(30) Priority: 07.05.2014 JP 2014095700
(43) Date of publication of application: 11.11.2015
(73) Proprietor: Yamaha Hatsudoki Kabushiki Kaisha, Iwata-shi, Shizuoka-ken 438-8501 (JP)
(72) Inventor: Takahashi, Tatsuya, Shizuoka-ken, 438-8501 (JP)
(74) Representative: Moreland, David

(56) References cited:
- JP-A- 2002 005 236
- JP-A- 2009 228 731
- US-A1- 2004 099 088

## Description

### FIELD OF INVENTION

The present invention relates to an internal combustion engine and a straddle-type vehicle equipped with the engine.

### BACKGROUND TO INVENTION

An internal combustion engine as disclosed in JP 2002-005236 A and JP 2009-228731 A, for example, is known in the art. The internal combustion engine has a reciprocating piston, a connecting rod connected to the piston, and a crankshaft connected to the connecting rod. The crankshaft has an extension shaft extending in a direction perpendicular to the direction of movement of the piston, a crank pin slidably connected to a large end of the connecting rod, and a crank arm connecting the extension shaft and the crank pin to each other. A balance weight is formed integrally with the crank arm, in order to reduce the vibrations of the internal combustion engine that are associated with the reciprocating motion of the piston. The crank arm and balance weight that are integrated with each other are called a crank web. The center of the crank pin is deviated from the center of the extension shaft. When viewed in the axial direction of the extension shaft, the center of the extension shaft is positioned between the balance weight and the center of the crank pin.

An internal combustion engine in which the crank pin and the crank web are composed of separate parts is also known. In this type of internal combustion engine, a hole for receiving the crank pin is formed in the crank web. The crank pin is press-fitted into the hole and is thereby secured to the crank web.

It is known that, after the crank pin is press-fitted into the hole in the crank web, stress occurs in the crank web, causing the crank web to warp slightly. When the crank web warps, the extension shaft inclines. Conventionally, in the manufacturing process of the internal combustion engine, the inclination of the extension shaft is corrected after the crank pin is press-fitted.

It is an object of at least one embodiment of at least one aspect of the present invention to obviate or at least mitigate one or more problems or disadvantages in the prior art.

### SUMMARY OF INVENTION

Various aspects of the present invention are defined in the appended independent claims. Some preferred features are defined in the appended dependent claims.

In the past, the inclination of the extension shaft was large after the crank pin was press-fitted, so a considerable amount of time and effort was necessary for correcting the inclination of the extension shaft. However, if the inclination of the extension shaft after press-fitting the crank pin can be lessened, the time and effort required for the correction work may be reduced, or the correction work may even be eliminated.

The present invention has been accomplished in view of the foregoing problem, and it is an object of at least one embodiment of the invention to provide an internal combustion engine that has a crankshaft in which the extension shaft does not incline easily after the crank pin is press-fitted, and to provide a straddle-type vehicle equipped with the engine.

An internal combustion engine according to an embodiment of the present invention may comprise a reciprocating piston, a connecting rod connected to the piston, and a crankshaft connected to the connecting rod. The crankshaft may comprise a first crank web including a first surface, a second surface being an opposite surface of the first surface, and a first hole extending from the first surface to the second surface. The crank shaft may comprise a first extension shaft, which may protrude from a center of rotation of the first crank web in the first surface. The crank shaft may comprise a crank pin, which may be press-fitted in the first hole, and may protrude from the second surface of the first crank web, and may be connected to the connecting rod. The first surface of the first crank web may include a first inner peripheral edge portion positioned around the first hole. The first surface of the first crank web may comprise a first recessed portion, which may be recessed relative to the first inner peripheral edge portion. The second surface of the first crank web may include a first balance weight portion, which may be provided opposite the first hole with respect to the center of rotation of the first crank web and may protrude from the second surface. A direction in which the first hole is positioned with respect to the center of rotation of the first crank web may be defined as upward or a first direction. A direction in which the first balance weight portion is positioned with respect to the center of rotation of the first crank web may be defined as downward or a second direction. An upper end of the first recessed portion may be positioned upward relative to, or further from the center of rotation of the first crank web in the first direction than, a lower end of the first hole. A lower end of the first recessed portion may be positioned downward relative to, or further from the center of rotation of the first crank web in the second direction than, the lower end of the first hole.

After the crank pin is press-fitted into the first hole of the first crank web, stress may be produced in radially outward directions of the first hole in the first crank web. At this time, if the peripheral portion of the first hole that has high rigidity is positioned at an axial end thereof, the stress may tend to occur unevenly in the first crank web, and there may be a risk that the first crank web may warp. As a consequence, there may be a risk that the first extension shaft may be inclined. In the above-described internal combustion engine, however, the first crank web may have the first surface and the second surface, and the first recessed portion may be provided in the first surface, which may be opposite the second surface, in which the first balance weight portion may be provided. The first recessed portion may be provided to a side of the first hole. This means that a portion of the first crank web that is around the first hole and has high rigidity may be positioned in the vicinity of the axial midpoint of the first crank web. As a result, even when stress occurs due to the press-fitting of the crank pin, the stress may primarily occur in the above mentioned portion, that is, the portion of the first crank web that may have high rigidity and may be in the vicinity of the axial midpoint of the first crank web. Therefore, the stress in the first crank web may not easily become uneven. Thus, the warpage of the first crank web may be inhibited, and the inclination of the first extension shaft may be reduced.

A lower end of the first recessed portion may be positioned at the same height, or the same distance from the center of rotation of the first crank web in the second direction, as an upper end of the first balance weight portion in a cross section of the first crank web that is parallel to a cross section through the center of rotation thereof and a center of the first hole,.

This may allow the first recessed portion to have a larger size while ensuring a sufficient size of the first balance weight portion. As a result, it may become possible to inhibit the warpage of the first crank web and the inclination of the first extension shaft while sufficiently reducing the vibrations of the internal combustion engine.

The upper end of the first recessed portion may be positioned upward relative to, or further from the center of rotation of the first crank web in the first direction than, the center of the first hole.

This may allow the first recessed portion to have a larger size. Therefore, it may become possible to further inhibit the warpage of the first crank web and the inclination of the first extension shaft.

The second surface of the first crank web may include a second inner peripheral edge portion, which may be positioned around the first hole. The second surface of the first crank web may include a second recessed portion, which may be positioned in an opposite side of the first recessed portion of the first surface and may be recessed relative to the second inner peripheral edge portion. An axially middle position of the first crank web, or a geometric centre of the first crank web in a longitudinal direction of the crank shaft, may be positioned between the first recessed portion and the second recessed portion.

The portion of,the first crank web that is around the first hole and which may have high rigidity, may be the portion between the first recessed portion and the second recessed portion. The portion of the first crank web that is around the first hole and may have high rigidity may be positioned in the axially middle position or geometric centre of the first crank web. Therefore, it may become possible to more effectively inhibit the warpage of the first crank web and the inclination of the first extension shaft, which result from the press-fitting of the crank pin.

The first surface of the first crank web may include a first outer peripheral edge portion positioned at an outer peripheral edge of the first crank web. The inner peripheral edge portion may be recessed relative to the outer peripheral edge portion. This may enable the first crank web to have higher rigidity.

The crankshaft may also comprise a second crank web including a third surface, a fourth surface being an opposite surface to the third surface, and a second hole extending from the third surface to the fourth surface. The second crank web may be disposed so that the fourth surface faces the second surface of the first crank web. The crank shaft may comprise a second extension shaft, which may protrude from a center of rotation of the second crank web in the third surface. The crank pin may be press-fitted in the second hole, and may protrude from the fourth surface of the second crank web. The third surface of the second crank web may include a second outer peripheral edge portion, which may be positioned at an outer peripheral edge of the second crank web. The third surface of the second crank web may include a third inner peripheral edge portion, which may be positioned around the second hole and may be recessed relative to the second outer peripheral edge portion. The third surface of the second crank web may include a third recessed portion, which may be recessed relative to the third inner peripheral edge portion. The fourth surface of the second crank web may include a second balance weight portion, which may be provided opposite the second hole with respect to the center of rotation of the second crank web, and may protrude from the fourth surface. An annular filter may be provided radially inwardly of the second outer peripheral edge portion of the second crank web. An upper end of the third recessed portion may be positioned upward relative to, or further from the center of rotation of the second crank web in the first direction than, the lower end of the second hole. A lower end of the third recessed portion may be positioned downward relative to, or further from the center of rotation of the second crank web in the second direction than, the lower end of the second hole.

This may inhibit the warpage of the crank web, which may result from the press-fitting of the crank pin, even in the second crank web, which may be provided with a filter, as well as in the first crank web. As a result, it may become possible to inhibit the inclination of the second extension shaft.

An upper end of the second balance weight portion may be positioned upward relative to, or further from the center of rotation of the second crank web in the first direction than, the upper end of the first balance weight portion in a cross section of the second crank web that may be parallel to a cross section through the center of rotation thereof and a center of the second hole.

As a result, even though the second crank web may be provided with the filter, the balance of the first crank web and the second crank web may be sufficiently achieved. As a result, vibrations of the engine associated with the rotation of the crankshaft may be sufficiently reduced.

The fourth surface of the second crank web may include a fourth inner peripheral edge portion, which may be positioned around the second hole. The fourth surface of the second crank web may include a fourth recessed portion, which may be positioned in an opposite side of the third recessed portion of the third surface and may be recessed relative to the fourth inner peripheral edge portion. An axially middle position of the second crank web, or a geometric centre of the second crank web in a longitudinal direction of the crank shaft, may be positioned between the third recessed portion and the fourth recessed portion.

The portion of the second crank web that may be around the second hole and may have high rigidity may be a portion between the third recessed portion and the fourth recessed portion. The portion of the second crank web that is around the second hole and which may have high rigidity may be positioned in an axially middle or geometrically central position of the second crank web. Therefore, it may become possible to more effectively inhibit the warpage of the second crank web and the inclination of the second extension shaft, which may otherwise result from the press-fitting of the crank pin.

A straddle-type vehicle according to the present invention may be a straddle-type vehicle comprising one of the foregoing internal combustion engines.

This may make it possible to obtain a straddle-type vehicle that exhibits the above-described advantageous effects.

The present invention may make it possible to provide an internal combustion engine that has a crankshaft in which the extension shaft does not incline easily after the crank pin is press-fitted, and to provide a straddle-type vehicle equipped with the engine.

According to a second aspect of the present invention is a crank web assembly for an internal combustion engine. The engine may comprise a reciprocating piston, and a connecting rod connected to the piston. The crank web assembly may be comprisable in, or be configured to form at least part of, a crankshaft that is connected or connectable to the connecting rod.

The crank web assembly may comprise a crank web, the crank web may include a first surface, a second surface being an opposite surface to the first surface, and a first hole extending from the first surface to the second surface. The crank web assembly may comprise an extension shaft, which may protrude from a centre of rotation of the crank web in the first surface. A crank pin may be press-fittable or press-fitted in the first hole such that it may protrude from the second surface of the first crank web, and may be connected to the connecting rod. The first surface of the crank web may include a first inner peripheral edge portion positioned around the first hole. The first surface of the crank web may comprise a first recessed portion, which may be recessed relative to the first inner peripheral edge portion. The second surface of the crank web may include a first balance weight portion, which may be provided opposite the first hole with respect to the centre of rotation of the first crank web and may protrude from the second surface. A direction in which the first hole is positioned with respect to the centre of rotation of the crank web may be defined as upward or a first direction. A direction in which the first balance weight portion is positioned with respect to the centre of rotation of the crank web may be defined as downward or a second direction. An upper end of the first recessed portion may be positioned upward relative to, or further from the centre of rotation of the crank web in the first direction than, a lower end of the first hole. A lower end of the first recessed portion may be positioned downward relative to, or further from the centre of rotation of the crank web in the second direction than, the lower end of the first hole.

According to a third aspect of the present invention is a method of assembling, fitting or retro-fitting the crank web assembly of the second aspect to an internal combustion engine, the engine comprising a reciprocating piston, and a connecting rod connected to the piston. The method may comprise press fitting a crank pin into the first hole of the crank web in order to connect the crank web assembly to the connecting rod.

It will be appreciated that features analogous to those described above in relation to any of the above aspects may be individually and separably or in combination applicable to any of the other aspects.

Apparatus features analogous to, or configured to implement, those described above in relation to a method and method features analogous to the use and fabrication of those described above in relation to an apparatus are also intended to fall within the scope of the present invention.

### BRIEF DESCRIPTION OF DRAWINGS

An embodiment of the present invention will now be described, by way of example only, with reference to the accompanying drawings, which are:
- **Figure 1**: a side view of a motorcycle;
- **Figure 2**: a cross-sectional view of an engine, taken along line II-II in Figure 1;
- **Figure 3**: a cross-sectional view illustrating a first crank shaft member and a second crank shaft member;
- **Figure 4**: a perspective view illustrating the first crank shaft member and the second crank shaft member;
- **Figure 5**: a view illustrating the first crank shaft member as viewed from the left;
- **Figure 6**: a view illustrating the first crank shaft member as viewed from the right;
- **Figure 7**: a view illustrating the second crank shaft member as viewed from the right;
- **Figure 8**: a view illustrating the second crank shaft member as viewed from the left;
- **Figure 9**: a view for illustrating an oil passage of the engine;
- **Figure 10**: a view schematically illustrating the inclination of a first extension shaft and a second extension shaft that results from warpage of a first crank web and a second crank web;
- **Figure 11**: a cross-sectional view of the first crank web taken along line S1-S1 in Figure 5;
- **Figure 12**: a cross-sectional view illustrating a comparative example of the first crank web, which corresponds to Figure 11; and
- **Figure 13**: a view illustrating the warpage of the first crank web and the inclination of the first extension shaft, caused by press-fitting a crank pin, concerning the first crank web according to a preferred embodiment of the present invention and that of the comparative example.

### DETAILED DESCRIPTION OF DRAWINGS

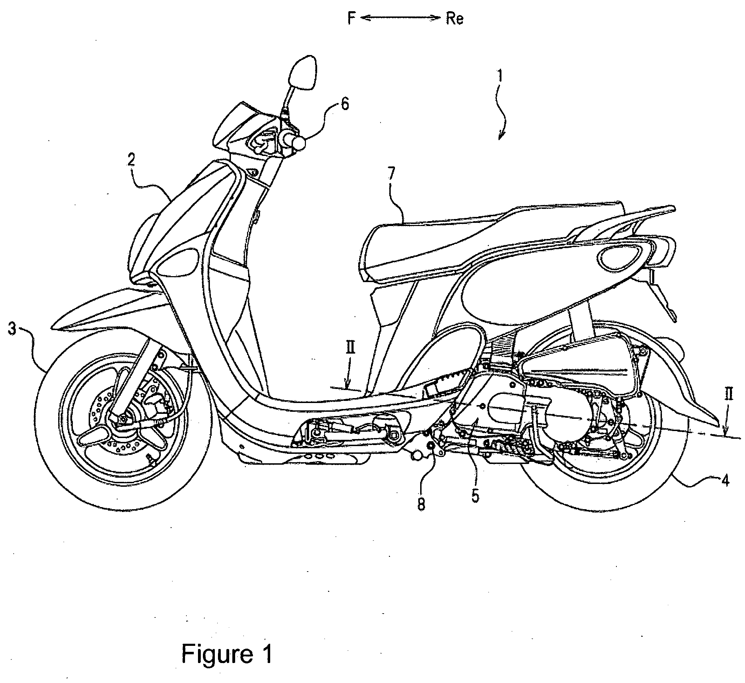

As illustrated in Figure 1, a straddle-type vehicle according to an embodiment is a scooter type motorcycle 1. The straddle-type vehicle, however, is intended to mean any type of vehicle on which a rider straddles to ride. The straddle-type vehicle is not limited to the scooter type motorcycle 1. The straddle-type vehicle may be another type of motorcycle. The straddle-type vehicle is not limited to a motorcycle. The straddle-type vehicle is not limited to a two-wheeled vehicle, but may be, for example, a three-wheeled vehicle that changes its traveling direction by leaning the vehicle body. An internal combustion engine according to the present preferred embodiment is mounted on a straddle-type vehicle. However, the internal combustion engine according to the present preferred embodiment does not necessarily need to be mounted on a straddle-type vehicle.

In the following description other than the description of a later-described crankshaft 17, the terms "front," "rear," "left," "right," "up," and "down" respectively refer to front, rear, left, right, up, and down as defined based on the perspective of the rider (not shown) seated on the seat 7 of the motorcycle 1. The terms "above/up" and "below/down" respectively mean the relative vertical positions above/up and below/down as used when the motorcycle 1 is at a standstill on a horizontal plane. Reference characters F, Re, L, and R in the drawings indicate front, rear, left, and right, respectively.

The motorcycle 1 has a vehicle body 2, a front wheel 3, a rear wheel 4, and an engine unit 5 for driving the rear wheel 4. The vehicle body 2 has a handlebar 6, which is operated by the rider, and a seat 7, on which the rider is to be seated. The engine unit 5 is what is called a unit swing type engine unit. The engine unit 5 is supported by a body frame, which is not shown in the drawings, and the engine unit 5 can swing about a pivot shaft 8. The engine unit 5 is supported so as to be swingable relative to the body frame.

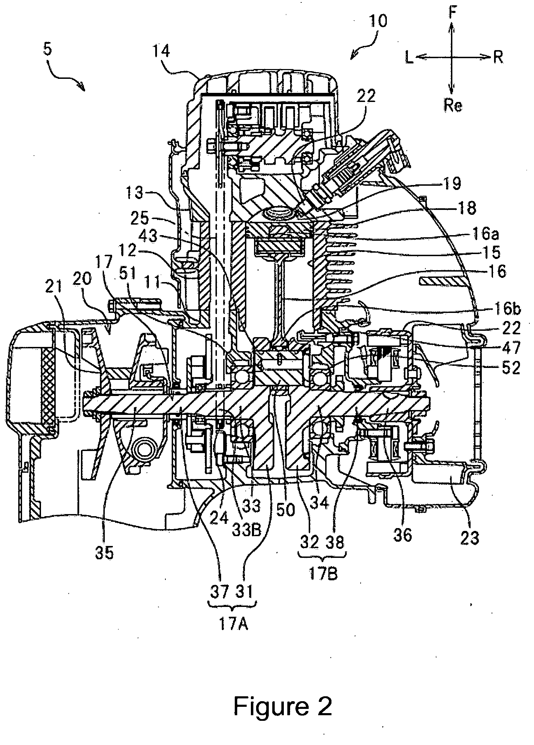

Figure 2 is a cross-sectional view illustrating a portion of the engine unit 5, which is taken along line II-II of Figure 1. As illustrated in Figure 2, the engine unit 5 includes an internal combustion engine 10 (hereinafter referred to simply as "engine") and a V-belt type continuously variable transmission 20 (hereinafter referred to as "CVT"). In the present embodiment, the engine 10 and the CVT 20 integrally form the engine unit 5. However, it is also possible that the engine 10 and the CVT 20 may be separated from each other. The transmission in the engine unit 5 is not limited to the CVT 20.

The engine 10 is what is called a single-cylinder engine. The engine 10 has a single cylinder. The engine 10 is a four-stroke engine, which repeats an intake stroke, a compression stroke, a combustion stroke, and an exhaust stroke, one after another. The engine 10 has a crankcase 11, a cylinder block 12 connected to the crankcase 11, a cylinder head 13 connected to the cylinder block 12, and a cylinder head cover 14 connected to the cylinder head 13. A cylinder 15 is formed inside the cylinder block 12. A piston 18 is accommodated slidably in the cylinder 15. The piston 18 reciprocates in the cylinder 15. A combustion chamber 19 is formed above the piston 18. An ignition device 22 facing combustion chamber 19 is attached to the cylinder head 13. The engine 10 has a crankshaft 17 and a connecting rod 16 connecting the crankshaft 17 and the piston 18 to each other. The connecting rod 16 comprises a small end 16a and a large end 16b. The small end 16a is slidably connected to the piston 18, and the large end 16b is slidably connected to the crankshaft 17.

The crankshaft 17 receives a force from the piston 18 via the connecting rod 16, and rotates. The crankshaft 17 is driven by the piston 18. The crankshaft 17 rotates in association with the reciprocating motion of the piston 18. The crankshaft 17 has a first crank web 31, a first extension shaft 37, a second crank web 32, a second extension shaft 38, and a crank pin 50.

The first crank web 31 and the first extension shaft 37 are integrally formed with each other. Hereinafter, the first crank web 31 and the first extension shaft 37 are referred to as a first crank shaft member 17A. The first extension shaft 37 is disposed to the left of the first crank web 31. The first extension shaft 37 includes a first crank journal 33 disposed to the left of the first crank web 31, a first output shaft portion 33B disposed to the left of the first crank journal 33, and a second output shaft portion 35 disposed to the left of the first output shaft portion 33B. The diameter of the first output shaft portion 33B is smaller than the diameter of the first crank journal 33, and the diameter of the second output shaft portion 35 is smaller than the diameter of the first output shaft portion 33B. A first bearing 51 is provided in the crankcase 11. The first crank journal 33 is supported by the first bearing 51. In other words, the first crank journal 33 is supported by the crankcase 11 via the first bearing 51. A sprocket 24 is fitted to the first output shaft portion 33B. A cam chain 25 is wrapped around the sprocket 24. A drive pulley 21 of the CVT 20 is fitted to the second output shaft portion 35. As mentioned earlier, the transmission of the engine unit 5 is not limited to the CVT 20. It is possible that a dog clutch type transmission may be fitted to the second output shaft portion 35.

The second crank web 32 and the second extension shaft 38 are integrally formed with each other. Hereinafter, the second crank web 32 and the second extension shaft 38 are referred to as a second crank shaft member 17B. The second extension shaft 38 is disposed to the right of the second crank web 32. The second extension shaft 38 includes a second crank journal 34 disposed to the right of the second crank web 32, and a third output shaft portion 36 disposed to the right of the second crank journal 34. The diameter of the third output shaft portion 36 is smaller than the diameter of the second crank journal 34. A second bearing 52 is provided in the crankcase 11. The second crank journal 34 is supported by the second bearing 52. The second crank journal 34 is supported by the crankcase 11 via the second bearing 52. An alternator 22 and a fan 23 are fitted to the third output shaft portion 36.

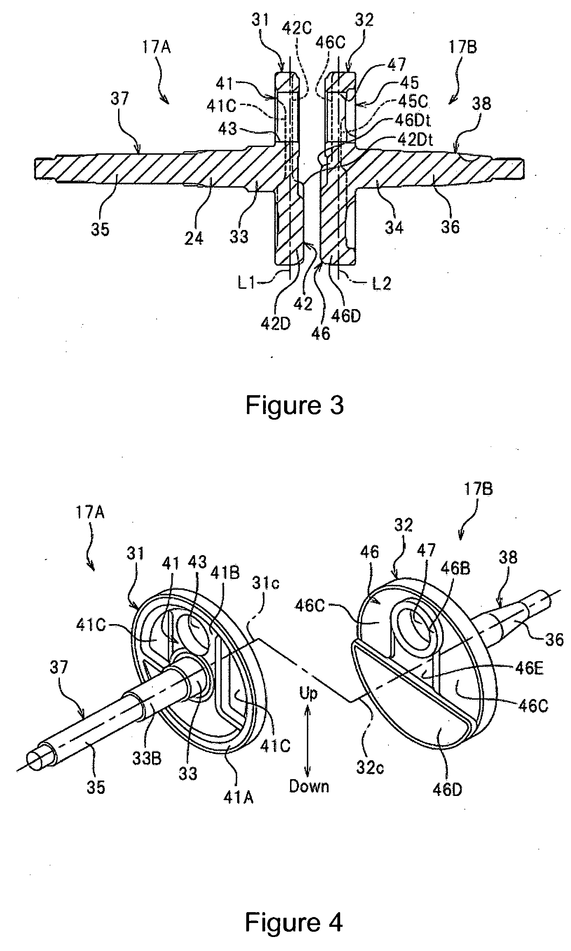

Figure 3 is a cross-sectional view illustrating the elements of the crankshaft 17 other than the crank pin 50, i.e., the first crank shaft member 17A and the second crank shaft member 17B. Figure 4 is a perspective view illustrating the first crank shaft member 17A and the second crank shaft member 17B. As illustrated in Figure 4, the first crank web 31 is formed in a disk shape. The first crank web 31 has a left surface 41, a right surface 42 (see Figure 3), and a hole 43 extending from the left surface 41 to the right surface 42. The hole 43 is a through-hole. Note that the left surface 41, the right surface 42, and the hole 43 are examples of the "first surface," the "second surface," and the "first hole", respectively.

Since the crankshaft 17 rotates, the position of the hole 43 changes. For convenience in describing the crankshaft 17 in the present description, the direction in which the hole 43 is positioned with respect to the center 31 c of the first crank web 31 is defined as upward or a first direction and an opposite direction is defined as downward or a second direction. The terms "up" and "down" in Figure 4 represent upward and downward, respectively.

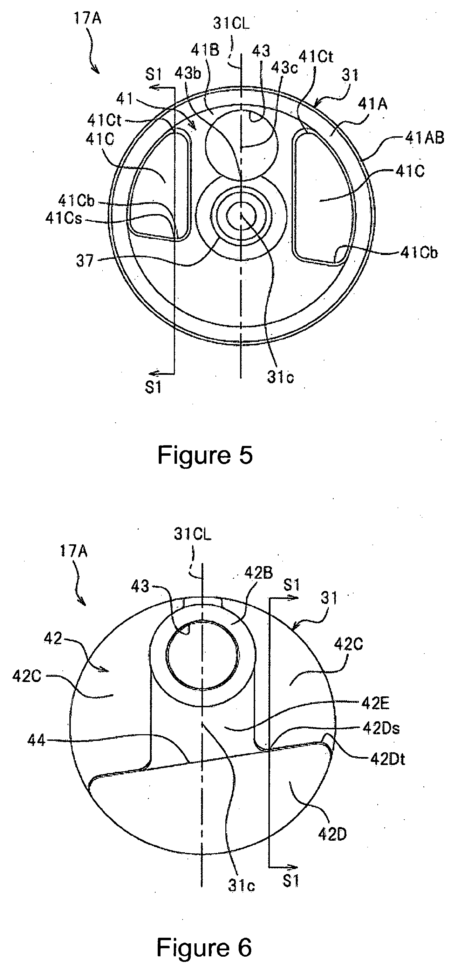

Figure 5 is a view illustrating the first crank shaft member 17A as viewed from the left. The first extension shaft 37 protrudes leftward from the center 31c of the left surface 41 of the first crank web 31. Note that the center 31c of the first crank web 31 is in agreement or coaxial with the center of rotation of the first crank web 31 in the present embodiment.

The left surface 41 of the first crank web 31 has an outer peripheral edge portion 41A positioned at the outer peripheral edge of the first crank web 31, an inner peripheral edge portion 41 B positioned around the hole 43, and two recessed portions 41C. The outer peripheral edge portion 41 A, the inner peripheral edge portion 41 B, and the recessed portion 41C are examples of the "first outer peripheral edge portion," the "first inner peripheral edge portion," and the "first recessed portion," respectively.

In the present preferred embodiment, the radially outward portion of the outer peripheral edge portion 41A forms an inclined surface 41AB. The inclined surface 41AB is, however, not always necessary and may be eliminated. The inner peripheral edge portion 41B is recessed relative to the outer peripheral edge portion 41A. Each of the recessed portions 41C is recessed relative to the inner peripheral edge portion 41 B.

The line connecting the center 31c of the first crank web 31 and the center 43c of the hole 43 to each other is defined as a center line 31 CL of the first crank web 31. The center line 31 CL is positioned between the two recessed portions 41C. The two recessed portions 41C are disposed on different sides of the left surface 41 from each other with respect to the center line 31CL.

The upper end 41Ct of each of the recessed portions 41C is positioned upward relative to the lower end 43b of the hole 43. Herein, the upper end 41Ct of each of the recessed portions 41C is positioned upward relative to the center 43c of the hole 43. However, the upper end 41 Ct of each of the recessed portions 41C may be positioned either at the same height as or at a position lower than the center 43c of the hole 43. The lower end 41 Cb of each of the recessed portions 41C is positioned downward relative to the lower end 43b of the hole 43. The shape and size of the two recessed portions 41C may be either the same as or different from each other.

Figure 6 is a view illustrating the first crank shaft member 17A as viewed from the right. The right surface 42 of the first crank web 31 has an inner peripheral edge portion 42B positioned around the hole 43, two recessed portions 42C that are recessed relative to the inner peripheral edge portion 42B, and a balance weight portion 42D protruding rightward. The inner peripheral edge portion 42B, the recessed portion 42C, and the balance weight portion 42D are examples of the "second inner peripheral edge portion," the "second recessed portion," and the "first balance weight portion."

The center line 31CL is positioned between the two recessed portions 42C. The balance weight portion 42D is positioned opposite the hole 43 with respect to the center 31 c of the first crank web 31. The balance weight portion 42D is disposed downward relative to the hole 43. The upper edge 44 of the balance weight portion 42D is inclined with respect to the center line 31CL. The upper edge 44 of the balance weight portion 42D may, however, be perpendicular to the center line 31 CL.

The right surface 42 of the first crank web 31 further has a central portion 42E that is positioned below the inner peripheral edge portion 42B and above the balance weight portion 42D. The central portion 42E is recessed relative to the balance weight portion 42D, and is also recessed relative to the inner peripheral edge portion 42B. The recessed portions 42C are recessed relative to the central portion 42E.

In Figures 5 and 6, the cross section taken along line S1-S1 is a cross section parallel to the cross section through the center 31c of the first crank web 31 and the center 43c of the hole 43 (i.e., the cross section through the center line 31CL). Hereinbelow, this cross section is referred to as a vertical cross section. In the vertical cross section, the lower end 41 Cs of each of the recessed portions 41C is positioned at the same height as an upper end 42Ds of the balance weight portion 42D. When the first crank web 31 is viewed in an axial direction, the position of the lower edge of each of the recessed portions 41C and the position of the upper edge 44 of the balance weight portion 42D are in agreement with each other.

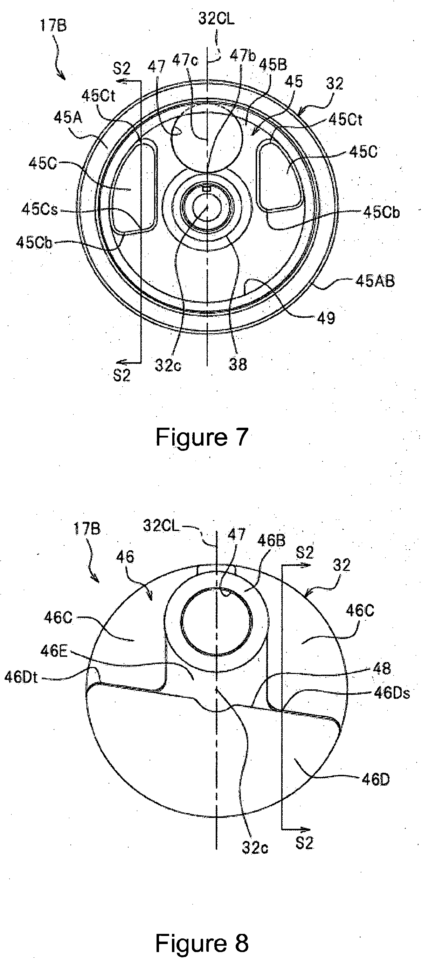

As illustrated in Figure 4, the second crank web 32 is formed in a disk shape. The diameter of the second crank web 32 and the diameter of the first crank web 31 are equal to each other. It is, however, possible that the diameter of the second crank web 32 and the diameter of the first crank web 31 may be different from each other. The second crank web 32 has a left surface 46, a right surface 45 (see Figure 7), and a hole 47 extending from the right surface 45 to the left surface 46. The hole 47 is a through-hole. The right surface 45, the left surface 46, and the hole 47 are examples of the third surface, the fourth surface, and the second hole, respectively.

Figure 7 is a view illustrating the second crank shaft member 17B as viewed from the right. The second extension shaft 38 protrudes rightward from the center 32c of the right surface 45 of the second crank web 32. Note that the center 32c of the second crank web 32 is in agreement or coaxial with the center of rotation of the second crank web 32 in the present preferred embodiment. Also, the center 32c of the second crank web 32 is in agreement or coaxial with the center 31 c of the first crank web 31.

The right surface 45 of the second crank web 32 has an outer peripheral edge portion 45A positioned at the outer peripheral edge of the second crank web 32, an inner peripheral edge portion 45B positioned around the hole 47, and two recessed portions 45C. The outer peripheral edge portion 45A, the inner peripheral edge portion 45B, and the recessed portion 45C are examples of the "second outer peripheral edge portion," the "third inner peripheral edge portion," and the "third recessed portion," respectively.

In the present preferred embodiment, the radially outward portion of the outer peripheral edge portion 45A forms an inclined surface 45AB. The inclined surface 45AB is, however, not always necessary and may be eliminated. The inner peripheral edge portion 45B is recessed relative to the outer peripheral edge portion 45A. Each of the recessed portions 45C is recessed relative to the inner peripheral edge portion 45B.

The line connecting the center 32c of the second crank web 32 and the center 47c of the hole 47 to each other is defined as a center line 32CL of the second crank web 32. The center line 32CL is positioned between the two recessed portions 45C. The two recessed portions 45C are disposed on different sides of the right surface 45 from each other with respect to the center line 32CL.

The upper end 45Ct of each of the recessed portions 45C is positioned upward relative to the lower end 47b of the hole 47. Herein, the upper end 45Ct of each of the recessed portions 45C is positioned at the same height as the center 47c of the hole 47. However, the position of the upper end 45Ct of each of the recessed portions 45C may be either higher or lower than the center 47c of the hole 47. The lower end 45Cb of each of the recessed portions 45C is positioned downward relative to the lower end 47b of the hole 47. The shape and size of the two recessed portions 45C may be either the same as or different from each other.

Figure 8 is a view illustrating the second crank shaft member 17B as viewed from the left. The left surface 46 of the second crank web 32 has an inner peripheral edge portion 46B positioned around of the hole 47, two recessed portions 46C that are recessed relative to the inner peripheral edge portion 46B, and a balance weight portion 46D protruding leftward. The inner peripheral edge portion 46B, the recessed portion 46C, and the balance weight portion 46D are examples of the "fourth inner peripheral edge portion," the "fourth recessed portion," and the "second balance weight portion," respectively.

The center line 32CL is positioned between the two recessed portions 46C. The balance weight portion 46D is positioned opposite the hole 47 with respect to the center 32c of the second crank web 32. The balance weight portion 46D is disposed downward relative to the hole 47. The upper edge 48 of the balance weight portion 46D is inclined with respect to the center line 32CL. The upper edge 48 of the balance weight portion 46D may, however, be perpendicular to the center line 32CL.

The left surface 46 of the second crank web 32 further has a central portion 46E that is positioned below the inner peripheral edge portion 46B and above the balance weight portion 46D. The central portion 46E is recessed relative to the balance weight portion 46D, and is also recessed relative to the inner peripheral edge portion 46B. The recessed portions 46C are recessed relative to the central portion 46E.

In Figures 7 and 8, the cross section taken along line S2-S2 is a cross section parallel to the cross section through the center 32c of the second crank web 32 and the center 47c of the hole 47 (i.e., the cross section through the center line 32CL). Hereinbelow, this cross section is referred to as a vertical cross section. In the vertical cross section, the lower end 45Cs of each of the recessed portions 45C is positioned at the same height as an upper end 46Ds of the second balance weight portion 46D. When the second crank web 32 is viewed in an axial direction, the position of the lower edge of each of the recessed portions 45C and the position of the upper edge 48 of the balance weight portion 46D are in agreement with each other.

As illustrated in Figure 4, the first crank web 31 and the second crank web 32 are disposed coaxially with each other. The center 31 c of the first crank web 31 and the center 32c of the second crank web 32 are in agreement with each other. The right surface 42 of the first crank web 31 and the left surface 46 of the second crank web 32 face each other.

As illustrated in Figure 2, the crank pin 50 is press-fitted in the hole 43 of the first crank web 31 and the hole 47 of the second crank web 32. The first crank web 31 and the second crank web 32 are connected to each other by the crank pin 50. The crank pin 50 is also inserted in the large end 16b of the connecting rod 16. The connecting rod 16 is slidably or rotatably connected to the crank pin 50.

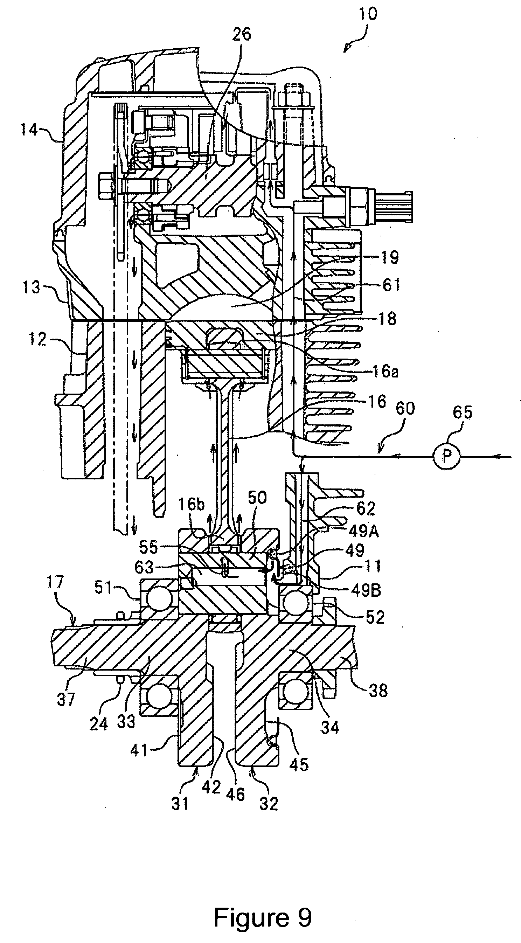

As illustrated in Figure 9, the engine 10 has an oil passage 60 for passing oil. The oil is supplied through the oil passage 60 to various sliding parts in the engine 10. The oil passage 60 is provided with a pump 65 for delivering the oil. Although not shown in the drawings, the pump 65 is installed in a bottom portion of the crankcase 11. The oil passage 60 includes a passage 61 formed in the cylinder block 12, the cylinder head 13, and the cylinder head cover 14, a passage 62 formed in the crankcase 11, and a passage 63 formed in the crank pin 50 of the crankshaft 17.

A filter 49 is provided for the oil passage 60. The filter 49 is for separating solid matter contained in the oil from the oil. As illustrated in Figure 7, the filter 49 is fitted to the right surface 45 of the second crank web 32. The filter 49 is formed in an annular shape. The filter 49 is provided radially inward of the outer peripheral edge portion 45A of the second crank web 32. As illustrated in Figure 9, the filter 49 has a mount portion 49A mounted to the right surface 45 of the second crank web 32, and a flat surface portion 49B extending radially inward from the mount portion 49A. The mount portion 49A is optionally formed to have a U-shaped cross section. The shape of the mount portion 49A is, however, not particularly restricted. The mount portion 49A is in contact with the right surface 45 of the second crank web 32, and the flat surface portion 49B is spaced apart from the right surface 45. A gap is formed between the flat surface portion 49B and the right surface 45. A radially outward region from the flat surface portion 49B of the filter 49 is closed by the mount portion 49A. A radially inward region from the flat surface portion 49B of the filter 49 is left open.

Part of the oil supplied from the pump 65 flows through the passage 61. The oil that has flowed through the passage 61 is supplied to an intake valve (not shown), an exhaust valve (not shown), a camshaft 26 for driving the valves, and the like, which are disposed in the cylinder head cover 14. The other part of the oil supplied from the pump 65 flows through the passage 62. The oil that has flowed through the passage 62 is supplied to the second bearing 52 to lubricate the second bearing 52.

The oil flows leftward from the second bearing 52 and flows into the filter 49 of the crankshaft 17. More specifically, the oil flows into the gap between the flat surface portion 49B of the filter 49 and the right surface 45 of the second crank web 32. If the oil contains a foreign solid matter, a centrifugal force acts on the solid matter because the crankshaft 17 is rotating. By the centrifugal force, the solid matter is collected in a radially outward region within the filter 49. As a result, the solid matter is captured by the filter 49. Thus, the solid matter contained in the oil can be removed.

The oil in the filter 49 flows into the passage 63 formed inside the crank pin 50. The oil inside the passage 63 flows out of the crank pin 50 through a small hole 55 formed in the crank pin 50. This oil is supplied to the outer peripheral surface of the crank pin 50. As a result, the crank pin 50 and the large end 16b of the connecting rod 16 are lubricated. The oil that has lubricated the crank pin 50 and the large end 16b of the connecting rod 16 flows along the circumference of the connecting rod 16, and it is supplied to the small end 16a of the connecting rod 16. The oil that has been supplied to the small end 16a of the connecting rod 16 lubricates the small end 16a of the connecting rod 16 and the piston 18.

The crankshaft 17 is manufactured by coupling the first crank shaft member 17A and the second crank shaft member 17B to each other by the crank pin 50. The first crank shaft member 17A and the second crank shaft member 17B are manufactured by, for example, forging. For example, the first crank web 31 and the first extension shaft 37 are integrally formed with each other by forging. For example, the second crank web 32 and the second extension shaft 38 are integrally formed with each other by forging. The crank pin 50 may also be manufactured by, for example, forging. The method of manufacturing the first crank shaft member 17A, the second crank shaft member 17B, and the crank pin 50 is, however, not restricted in any way. The first crank shaft member 17A, the second crank shaft member 17B, or the crank pin 50 may be manufactured by casting. After manufacturing the first crank shaft member 17A, the second crank shaft member 17B and the crank pin 50, the crank pin 50 is press-fitted into the hole 43 of the first crank web 31 and the hole 47 of the second crank web 32.

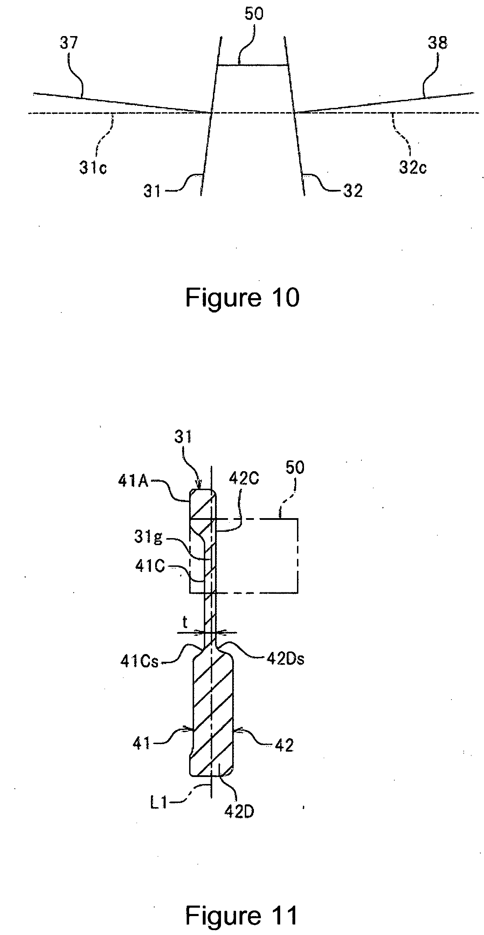

After the crank pin 50 has been press-fitted therein, the first crank web 31 and the second crank web 32 receive pressure from the crank pin 50. As a consequence, stress occurs in the first crank web 31 and the second crank web 32. Such stress causes warpage of the first crank web 31 and the second crank web 32. As a consequence, as schematically illustrated in Figure 10, the first extension shaft 37 is inclined relative to the center 31 c of the first crank web 31 in which the crank pin 50 is not yet press-fitted. Likewise, the second extension shaft 38 is inclined relative to the center 32c of the second extension shaft 38 in which the crank pin 50 is not yet press-fitted.

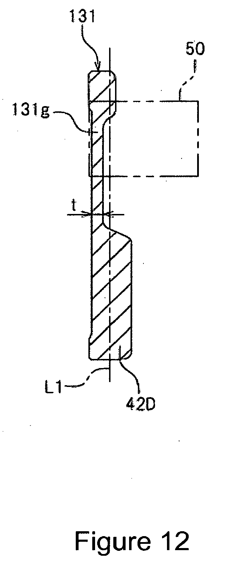

In the present preferred embodiment, the left surface 41 of the first crank web 31 has the recessed portions 41C. Figure 11 is a cross-sectional view of the first crank web 31 taken along line S1-S1 (see Figure 5). Here, let us consider a first crank web 131 that does not have the recessed portion 41C. Figure 12 is a cross-sectional view that illustrates the first crank web 131, which corresponds to Figure 11. In the first crank webs 31 and 131, the portions in which a large stress occurs due to the press-fitting of the crank pin 50 are portions 31g and 131g, respectively, that are around the hole 43. Hereinafter, these portions are referred to as "stressed portions". It should be noted that each of the stressed portions 31 g and 131g is a portion around the hole 43 that has high rigidity. Herein, it is assumed that the thickness t of the stressed portion 31g of the first crank web 31 and the thickness t of the stressed portion 131 g are equal to each other.

As will be appreciated when comparing Figures 11 and 12 with each other, the stressed portion 31g of the first crank web 31 is positioned more rightward than the stressed portion 131g of the first crank web 131, because the first crank web 31 has the recessed portion 41C formed therein. When the axially middle position of each of the first crank web 31 and the first crank web 131 is defined as L1, the stressed portion 31g of the first crank web 31 is positioned closer to the middle position L1 than the stressed portion 131g of the first crank web 131. In the first crank web 31, the middle position L1 is positioned between the recessed portion 41C of the left surface 41 and the recessed portion 42C of the right surface 42. As a result, the first crank web 31 can inhibit the warpage resulting from the press-fitting of the crank pin 50 more effectively than the first crank web 131.

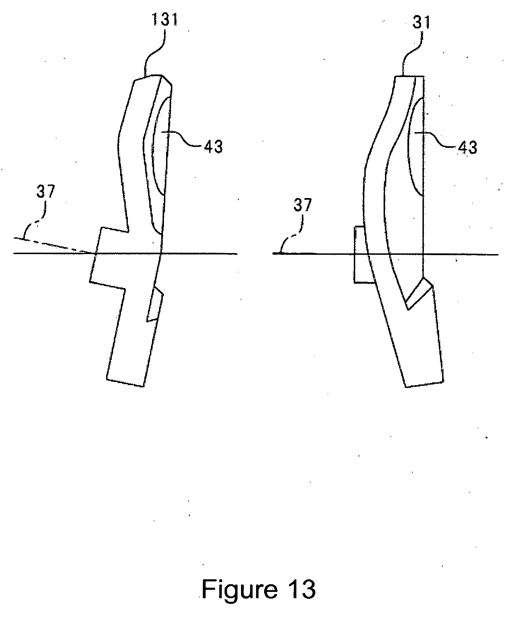

Figure 13 is a view illustrating the results of a comparative test conducted by the present inventor. As illustrated in Figure 13, the inclination of the first extension shaft 37 of the first crank web 31 is less than the inclination of the first extension shaft 37 of the first crank web 131. It was demonstrated that the first crank web 31, which has the recessed portion 41C, can reduce the inclination of the first extension shaft 37 resulting from the press-fitting of the crank pin 50 more effectively than the first crank web 131, which does not have the recessed portion 41C.

Although the detailed description will not be given, the same applies to the second crank web 32. That is, the second crank web 32 that has the recessed portion 45C can inhibit the warpage resulting from the press-fitting of the crank pin 50 more effectively and thus reduce the inclination of the second extension shaft 38 more effectively than a second crank web that does not have the recessed portion 45C.

As has been described thus far, in the engine 10 according to the present preferred embodiment, the first crank web 31 and the second crank web 32 are joined to each other by the crank pin 50. The first crank web 31 has the hole 43 in which the crank pin 50 is to be press-fitted. As illustrated in Figure 5, the left surface 41 of the first crank web 31 has the recessed portions 41C, which are recessed relative to the inner peripheral edge portion 41 B positioned around the hole 43. The upper end 41 Ct of each of the recessed portions 41C is positioned upward relative to the lower end 43b of the hole 43, and the lower end 41Cb of each of the recessed portions 41C is positioned downward relative to the lower end 43b of the hole 43. This makes it possible to inhibit the warpage of the first crank web 31, which results from the press-fitting of the crank pin 50. As a result, it is possible to inhibit the first extension shaft 37 from being inclined after the crank pin 50 is press-fitted. Thus, it becomes possible to reduce the time and labor necessary for the work of correcting the inclination of the first extension shaft 37 after press-fitting the crank pin 50 (for example, the work of hitting the first crank web 31 with a hammer to correct the inclination). It may even be possible to eliminate the work of correcting the inclination of the first extension shaft 37 after press-fitting the crank pin 50.

Note that the lower the position of the lower end 41 Cb of the recessed portion 41C, the greater the size of the recessed portion 41C. The greater the size of the recessed portion 41C, the more effectively the warpage of the first crank web 31 can be inhibited. However, the first crank web 31 has the balance weight portion 42D. It is necessary that the balance weight portion 42D have sufficient size, in order to reduce vibrations of the engine 10. If the position of the lower end 41 Cb of the recessed portion 41C is too low, the balance weight portion 42D cannot have sufficient size. In view of this point, in the present preferred embodiment, the lower end 41 Cs of each of the recessed portions 41C is positioned at the same height as the upper end 42Ds of the balance weight portion 42D, in the cross section taken along line S1-S1, which is parallel to the cross section through the center 31 c of the first crank web 31 and the center 43c of the hole 43. This allows the recessed portions 41C to have a larger size while ensuring a sufficient size of the balance weight portion 42D. It becomes possible to inhibit the warpage of the first crank web 31, which results from the press-fitting of the crank pin 50, while sufficiently reducing the vibrations of the internal combustion engine 10. It becomes possible to reduce the inclination of the first extension shaft 37 while sufficiently reducing the vibrations of the internal combustion engine 10.

The higher the position of the upper end 41 Ct of the recessed portion 41C, the greater the size of the recessed portion 41C. In the present preferred embodiment, the upper end 41Ct of each of the recessed portions 41C is positioned upward relative to the center 43c of the hole 43. Therefore, it becomes possible to sufficiently inhibit the warpage of the first crank web 31 and the inclination of the first extension shaft 37, which result from the press-fitting of the crank pin 50.

As illustrated in Figure 11, the axially middle position or axis L1 of the first crank web 31, e.g. the geometrically central position or axis of the first crank web 31 in the longitudinal direction of the crank shaft 17, is positioned between the recessed portion 41C of the left surface 41 and the recessed portion 42C of the right surface 42 in the first crank web 31. The stressed portion 31 g is disposed at the axially midpoint of the first crank web 31. Therefore, it becomes possible to more effectively inhibit the warpage of the first crank web 31 and the inclination of the first extension shaft 37, which result from the press-fitting of the crank pin 50.

As illustrated in Figure 5, the left surface 41 of the first crank web 31 has the outer peripheral edge portion 41 A. The inner peripheral edge portion 41 B is recessed relative to the outer peripheral edge portion 41A. The outer peripheral edge portion 41A protrudes leftward relative to the inner peripheral edge portion 41 B. Such a configuration can ensure sufficient inertial mass of the first crank web 31, and can reduce vibrations of the engine 10 desirably.

As illustrated in Figure 7, the second crank web 32 is provided with the filter 49. The second crank web 32 has the hole 47 in which the crank pin 50 is to be press-fitted. The right surface 45 of the second crank web 32 has the recessed portions 45C, which are recessed relative to the inner peripheral edge portion 45B positioned around the hole 47. The upper end 45Ct of each of the recessed portions 45C is positioned upward relative to the lower end 47b of the hole 47, and the lower end 45Cb of each of the recessed portions 45C is positioned downward relative to the lower end 47b of the hole 47. This makes it possible to inhibit the warpage of the second crank web 32, which results from the press-fitting of the crank pin 50. As a result, it becomes possible to inhibit the inclination of the second extension shaft 38, which results from the press-fitting of the crank pin 50.

Although the second crank web 32 is provided with the filter 49, the first crank web 31 is not provided with the filter 49. As illustrated in Figure 3, the upper end 46Dt of the balance weight portion 46D of the second crank web 32 is positioned upward relative to the upper end 42Dt of the balance weight portion 42D of the first crank web 31. In an arbitrary cross section of the second crank web 32 that is parallel to the cross section through the center 32c of the second crank web 32 and the center 47c of the hole 47, the upper end of the balance weight portion 46D is positioned upward relative to the upper end of the balance weight portion 42D. Such a configuration makes it possible to sufficiently reduce vibrations of the engine 10 associated with the rotation of the crankshaft 17.

As illustrated in Figure 3, the recessed portion 45C in the right surface 45 of the second crank web 32 is positioned rightward relative to an axially middle position L2 of the second crank web 32. The recessed portion 46C in the left surface 46 of the second crank web 32 is positioned leftward relative to the axially middle position L2 of the second crank web 32. The axially middle position or axis L2 of the second crank web 32, e.g. the geometrically central position or axis of the second crank web 32 in the longitudinal direction of the crank shaft 17, is positioned between the recessed portion 45C and the recessed portion 46C. Like the first crank web 31, the portion in which large stress occurs due to the press-fitting of the crank pin 50 is disposed in the axially middle part of the second crank web 32. The portion of the periphery of the hole 47 that has high rigidity is disposed in an axially middle part of the second crank web 32. Therefore, it becomes possible to more effectively inhibit the warpage of the second crank web 32 and the inclination of the second extension shaft 38, which result from the press-fitting of the crank pin 50.

In the present preferred embodiment, the first crank web 31 and the second crank web 32 are formed in a disk shape. The shape of the first crank web 31 and/or that of the second crank web 32 may not be limited to a disk shape.

Each of the first crank shaft member 17A and the second crank shaft member 17B is formed integrally. The first crank shaft member 17A and/or the second crank shaft member 17B may be formed by assembling a plurality of components.

In the present preferred embodiment, the engine 10 is a single-cylinder engine. However, the engine 10 may be a multi-cylinder engine.

In the present preferred embodiment, the first crank web 31 does not have the filter 49, and the second crank web 32 has the filter 49. However, it is also possible that the first crank web 31 may have the filter 49, and the second crank web 32 may not have the filter 49. It is also possible that neither the first crank web 31 nor the second crank web 32 have the filter 49. It is also possible that both the first crank web 31 and the second crank web 32 may have the filter 49.

In the present preferred embodiment, the two recessed portions 41C in the left surface 41 of the first crank web 31 have the same depth. However, the two recessed portions 41C may have different depths. In addition, the two recessed portions 45C in the right surface 45 of the second crank web 32 have the same depth. However, the two recessed portions 45C may have different depths. The depth of the recessed portion 41C, which is in the left surface 41 of the first crank web 31, and the depth of the recessed portion 45C, which is in the right surface 45 of the second crank web 32, may be either equal to or different from each other.

In the present preferred embodiment, the first extension shaft 37 is longer than the second extension shaft 38, and the thickness of the second crank web 32 is greater than the thickness of the first crank web 31, as illustrated in Figure 3. However, it is also possible that the length of the first extension shaft 37 may be equal to the length of the second extension shaft 38, or the second extension shaft 38 may be longer than the first extension shaft 37. The thickness of the first crank web 31 and the thickness of the second crank web 32 may be equal to each other. The thickness of the first crank web 31 may be greater than the thickness of the second crank web 32.

The terms and expressions which have been used herein are used as terms of description and not of limitation. In the use of such terms and expressions, there is no intention of excluding any equivalents of any of the features shown or described, or portions thereof, and it is recognized that various modifications are possible within the scope of the invention claimed. The present invention may be embodied in many different forms. This disclosure should be considered as providing exemplary embodiments of the principles of the invention. These embodiments are described herein with the understanding that such embodiments are not intended to limit the invention to any specific preferred embodiments described and/or illustrated herein. The present invention is not limited to specific embodiments described herein. The present invention encompasses all the embodiments including equivalents, alterations, omissions, combinations, improvements, and/or modifications that can be recognized by those skilled in the arts based on this disclosure. Limitations in the claims should be interpreted broadly based on the language used in the claims, and such limitations should not be limited to specific embodiments described in the present description or provided during prosecution of the present application.

It will be appreciated that the term straddle-type vehicle or motor vehicle used herein, and as used in the art, is meant to include the following terms also used in the art:
saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.

The invention is defined by appended claims only.

### REFERENCE SIGNS LIST

- 1: -- Motorcycle (straddle-type vehicle)
- 10: -- Internal combustion engine
- 17: -- Crankshaft
- 31: -- First crank web
- 32: -- Second crank web
- 41: -- Left surface (first surface)
- 41C: -- Recessed portion (first recessed portion)
- 42D: -- Balance weight portion (first balance weight portion)
- 42: -- Right surface (second surface)
- 43: -- Hole (first hole)
- 50: -- Crank pin

## Claims

1. An internal combustion engine (10) comprising:
a reciprocating piston (18); a connecting rod (16) connected to the piston (18); and a crankshaft (17) connected to the connecting rod (16);
the crankshaft (17) comprising:
a first crank web (31) including a first surface (41), a second surface (42) being an opposite surface to the first surface (41), and a first hole (43) extending from the first surface (41) to the second surface (42);
a first extension shaft (37) protruding from a center of rotation (31c) of the first crank web (31) in the first surface (41); and
a crank pin (50) press-fitted in the first hole (43), protruding from the second surface (42) of the first crank web (31), and connected to the connecting rod (16),
wherein:
the first surface (41) of the first crank web (31) includes a first inner peripheral edge portion (41B) positioned around the first hole (43), and a first recessed portion (41C) recessed relative to the first inner peripheral edge portion (41 B);
the second surface (42) of the first crank web (31) includes a first balance weight portion (42D) provided opposite the first hole (43) with respect to the center of rotation (31c) of the first crank web (31) and protruding from the second surface (42); and
where a direction in which the first hole (43) is positioned with respect to the center of rotation (31 c) of the first crank web (31) is defined as upward or a first direction and a direction in which the first balance weight portion (42D) is positioned with respect to the center of rotation (31c) of the first crank web (31) is defined as downward or a second direction, an upper end (41Ct) of the first recessed portion (41C) is positioned upward relative to, or further from the center of rotation (31 c) of the first crank web (31) in the first direction than, a lower end (43b) of the first hole (43), and a lower end (41 Cb) of the first recessed portion (41C) is positioned downward relative to, or further from the center of rotation (31 c) of the first crank web (31) in the second direction than, the lower end (43b) of the first hole (43).

2. The internal combustion engine (10) according to claim 1, wherein, in a cross section of the first crank web (31) that is parallel to a cross section through the center of rotation (31 c) thereof and a center (43c) of the first hole (43), a lower end (41 Cs) of the first recessed portion (41 C) is positioned at the same height, or the same distance from the center of rotation (31c) of the first crank web (31) in the second direction, as an upper end (42Ds) of the first balance weight portion (42D).

3. The internal combustion engine (10) according to claim 1 or 2, wherein the upper end (41Ct) of the first recessed portion (41C) is positioned upward relative to, or further from the center of rotation (31c) of the first crank web (31) in the first direction than, the center (43c) of the first hole (43).

4. The internal combustion engine (10) according to any of claims 1 to 3, wherein:
the second surface (42) of the first crank web (31) includes a second inner peripheral edge portion (42B) positioned around the first hole (43), and a second recessed portion (42C) positioned in an opposite side of the first recessed portion (41 C) of the first surface (41) and recessed relative to the second inner peripheral edge portion (42B); and
an axially middle position (L1) of the first crank web (31) is positioned between the first recessed portion (41 C) and the second recessed portion (42C).

5. The internal combustion engine (10) according to any of claims 1 to 4, wherein:
the first surface (41) of the first crank web (31) includes a first outer peripheral edge portion (41A) positioned at an outer peripheral edge of the first crank web (31); and the inner peripheral edge portion (41 B) is recessed relative to the outer peripheral edge portion (41 A).

6. The internal combustion engine (10) according to any of claims 1 to 5, wherein:
the crankshaft (17) comprises:
a second crank web (32) including a third surface (45), a fourth surface (46) being an opposite surface to the third surface (45), and a second hole (47) extending from the third surface (45) to the fourth surface (46), the second crank web (32) disposed so that the fourth surface (46) faces the second surface (42) of the first crank web (31); and
a second extension shaft (38) protruding from a center of rotation (32c) of the second crank web (32) in the third surface (45), and wherein:
the crank pin (50) is press-fitted in the second hole (47) and protrudes from the fourth surface (46) of the second crank web (32);
the third surface (45) of the second crank web (32) includes a second outer peripheral edge portion (45A) positioned at an outer peripheral edge of the second crank web (32), a third inner peripheral edge portion (45B) positioned around the second hole (47) and recessed relative to the second outer peripheral edge portion (45A), and a third recessed portion (45C) recessed relative to the third inner peripheral edge portion (45B);
the fourth surface (46) of the second crank web (32) includes a second balance weight portion (46D) provided opposite the second hole (47) with respect to the center of rotation (32c) of the second crank web (32) and protruding from the fourth surface (46);
an annular filter (49) is provided radially inward of the second outer peripheral edge portion (45A) of the second crank web (32); and
an upper end (45Ct) of the third recessed portion (45C) is positioned upward relative to, or further from the center of rotation (32c) of the second crank web (32) in the first direction than, a lower end (47b) of the second hole (47), and a lower end (45Cb) of the third recessed portion (45C) is positioned downward relative to, or further from the center of rotation (32c) of the second crank web (32) in the second direction than, the lower end (47b) of the second hole (47).

7. The internal combustion engine (10) according to claim 6, wherein, in a cross section of the second crank web (32) that is parallel to a cross section through the center of rotation (32c) thereof and a center (47c) of the second hole (47), an upper end (46Ds) of the second balance weight portion (46D) is positioned upward relative to, or further from the center of rotation (32c) of the second crank web (32) in the first direction than, the upper end (42Ds) of the first balance weight portion (42D).

8. The internal combustion engine (10) according to claims 6 or 7, wherein:
the fourth surface (46) of the second crank web (32) includes a fourth inner peripheral edge portion (46B) positioned around the second hole (47), and a fourth recessed portion (46C) positioned in an opposite side of the third recessed portion (45C) of the third surface (45) and recessed relative to the fourth inner peripheral edge portion (46B); and
an axially middle position (L2) of the second crank web (32) is positioned between the third recessed portion (45C) and the fourth recessed portion (46C).

9. A straddle-type vehicle (1) comprising an internal combustion engine (10) according to any of claims 1 to 8.

## Patentansprüche

1. Verbrennungskraftmaschine (10), die Folgendes umfasst:
einen hin- und hergehenden Kolben (18), eine mit dem Kolben (18) verbundene Pleuelstange (16) und eine mit der Pleuelstange (16) verbundene Kurbelwelle (17),
wobei die Kurbelwelle (17) Folgendes umfasst:
eine erste Kurbelwange (31), die eine erste Fläche (41), eine zweite Fläche (42), die eine zu der ersten Fläche (41) entgegengesetzte Fläche ist, und ein erstes Loch (43), das sich von der ersten Fläche (41) zu der zweiten Fläche (42) erstreckt, einschließt,
eine erste Verlängerungswelle (37), die von einem Drehungsmittelpunkt (31c) der ersten Kurbelwange (31) in der ersten Fläche (41) vorspringt, und
einen Kurbelzapfen (50), der in das erste Loch (43) eingepresst ist, wobei er von der zweiten Fläche (42) der ersten Kurbelwange (31) vorspringt und mit der Pleuelstange (16) verbunden ist,
wobei:
die erste Fläche (41) der ersten Kurbelwange (31) einen ersten inneren Umfangskantenabschnitt (41B), der um das erste Loch (43) angeordnet ist, und einen ersten eingezogenen Abschnitt (41 C), der im Verhältnis zu dem ersten inneren Umfangskantenabschnitt (41B) eingezogen ist, einschließt,
die zweite Fläche (42) der ersten Kurbelwange (31) einen ersten Ausgleichsgewichtsabschnitt (42D), der gegenüber dem ersten Loch (43) in Bezug auf den Drehungsmittelpunkt (31c) der ersten Kurbelwange (31) bereitgestellt wird und von der zweiten Fläche (42) vorspringt, einschließt, und
wobei eine Richtung, in der das erste Loch (43) in Bezug auf den Drehungsmittelpunkt (31c) der ersten Kurbelwange (31) angeordnet ist, als nach oben oder eine erste Richtung definiert wird und eine Richtung, in welcher der erste Ausgleichsgewichtsabschnitt (42D) in Bezug auf den Drehungsmittelpunkt (31c) der ersten Kurbelwange (31) angeordnet wird, als nach unten oder eine zweite Richtung definiert wird, ein oberes Ende (41Ct) des ersten eingezogenen Abschnitts (41C) im Verhältnis zu einem unteren Ende (43b) des ersten Lochs (43) nach oben angeordnet ist oder weiter vom Drehungsmittelpunkt (31c) der ersten Kurbelwange (31) in die erste Richtung weg angeordnet ist als ein unteres Ende (43b) des ersten Lochs (43) und ein unteres Ende (41Cb) des ersten eingezogenen Abschnitts (41C) im Verhältnis zum unteren Ende (43b) des ersten Lochs (43) nach unten angeordnet ist oder weiter vom Drehungsmittelpunkt (31c) der ersten Kurbelwange (31) in die zweite Richtung weg angeordnet ist als das untere Ende (43b) des ersten Lochs (43).

2. Verbrennungskraftmaschine (10) nach Anspruch 1, wobei, in einem Querschnitt der ersten Kurbelwange (31), der parallel zu einem Querschnitt durch den Drehungsmittelpunkt (31c) derselben und eine Mitte (43c) des ersten Lochs (43) ist, ein unteres Ende (41Cs) des ersten eingezogenen Abschnitts (41C) bei der gleichen Höhe oder der gleichen Entfernung von dem Drehungsmittelpunkt (31c) der ersten Kurbelwange (31) in der zweiten Richtung angeordnet ist wie ein oberes Ende (42Ds) des ersten Ausgleichsgewichtsabschnitts (42D).

3. Verbrennungskraftmaschine (10) nach Anspruch 1 oder 2, wobei das obere Ende (41Ct) des ersten eingezogenen Abschnitts (41C) im Verhältnis zum Mittelpunkt (43c) des ersten Lochs (43) nach oben angeordnet ist oder weiter vom Drehungsmittelpunkt (31c) der ersten Kurbelwange (31) in die erste Richtung weg angeordnet ist als der Mittelpunkt (43c) des ersten Lochs (43).

4. Verbrennungskraftmaschine (10) nach einem der Ansprüche 1 bis 3, wobei:
die zweite Fläche (42) der ersten Kurbelwange (31) einen zweiten inneren Umfangskantenabschnitt (42B), der um das erste Loch (43) angeordnet ist, und einen zweiten eingezogenen Abschnitt (42C), der in einer entgegengesetzten Seite des ersten eingezogenen Abschnitt (41C) der ersten Fläche (41) angeordnet und im Verhältnis zu dem zweiten inneren Umfangskantenabschnitt (42B) eingezogen ist, einschließt, und
eine in Axialrichtung mittlere Position (L1) der ersten Kurbelwange (31) zwischen dem ersten eingezogenen Abschnitt (41C) und dem zweiten eingezogenen Abschnitt (42C) angeordnet ist.

5. Verbrennungskraftmaschine (10) nach einem der Ansprüche 1 bis 4, wobei:
die erste Fläche (41) der ersten Kurbelwange (31) einen ersten äußeren Umfangskantenabschnitt (41A), der an einer äußeren Umfangskante der ersten Kurbelwange (31) angeordnet ist, einschließt, und der innere Umfangskantenabschnitt (41B) im Verhältnis zu dem äußeren Umfangskantenabschnitt (41A) eingezogen ist.

6. Verbrennungskraftmaschine (10) nach einem der Ansprüche 1 bis 5, wobei:
wobei die Kurbelwelle (17) Folgendes umfasst:
eine zweite Kurbelwange (32), die eine dritte Fläche (45), eine vierte Fläche (46), die eine zu der dritten Fläche (45) entgegengesetzte Fläche ist, und ein zweites Loch (47), das sich von der dritten Fläche (45) zu der vierten Fläche (46) erstreckt, einschließt, wobei die zweite Kurbelwange (32) so angeordnet ist, dass die vierte Fläche (46) der zweiten Fläche (42) der ersten Kurbelwange (31) gegenüberliegt, und
eine zweite Verlängerungswelle (38), die von einem Drehungsmittelpunkt (32c) der zweiten Kurbelwange (32) in der dritten Fläche (45) vorspringt, und wobei:
der Kurbelzapfen (50) in das zweite Loch (47) eingepresst ist und von der vierten Fläche (46) der zweiten Kurbelwange (32) vorspringt,
die dritte Fläche (45) der zweiten Kurbelwange (32) einen zweiten äußeren Umfangskantenabschnitt (45A), der an einer äußeren Umfangskante der zweiten Kurbelwange (32) angeordnet ist, einen dritten inneren Umfangskantenabschnitt (45B), der um das zweite Loch (47) angeordnet und im Verhältnis zu dem zweiten äußeren Umfangskantenabschnitt (45A) eingezogen ist, und einen dritten eingezogenen Abschnitt (45C), der im Verhältnis zu dem dritten inneren Umfangskantenabschnitt (45B) eingezogen ist, einschließt,
die vierte Fläche (46) der zweiten Kurbelwange (32) einen zweiten Ausgleichsgewichtsabschnitt (46D), der gegenüber dem zweiten Loch (47) in Bezug auf den Drehungsmittelpunkt (32c) der zweiten Kurbelwange (32) bereitgestellt wird und von der vierten Fläche (46) vorspringt, einschließt,
ein ringförmiger Filter (49) von dem zweiten äußeren Umfangskantenabschnitt (45A) der zweiten Kurbelwange (32) in Radialrichtung nach innen bereitgestellt wird und
ein oberes Ende (45Ct) des dritten eingezogenen Abschnitts (45C) im Verhältnis zu einem unteren Ende (47b) des zweiten Lochs (47) nach oben angeordnet ist oder weiter vom Drehungsmittelpunkt (32c) der zweiten Kurbelwange (32) in die erste Richtung weg angeordnet ist als ein unteres Ende (47b) des zweiten Lochs (47) und ein unteres Ende (45Cb) des dritten eingezogenen Abschnitts (45C) im Verhältnis zum unteren Ende (47b) des zweiten Lochs (47) nach unten angeordnet ist oder weiter vom Drehungsmittelpunkt (32c) der zweiten Kurbelwange (32) in die zweite Richtung weg angeordnet ist als das untere Ende (47b) des zweiten Lochs (47).

7. Verbrennungskraftmaschine (10) nach Anspruch 6, wobei, in einem Querschnitt der zweiten Kurbelwange (32), der parallel zu einem Querschnitt durch den Drehungsmittelpunkt (32c) derselben und eine Mitte (47c) des zweiten Lochs (47) ist, ein oberes Ende (46Ds) des zweiten Ausgleichsgewichtsabschnitts (46D) im Verhältnis zum oberen Ende (42Ds) des ersten Ausgleichsgewichtsabschnitts (42D) nach oben angeordnet ist oder weiter vom Drehungsmittelpunkt (32c) der zweiten Kurbelwange (32) in der ersten Richtung weg angeordnet ist als das obere Ende (42Ds) des ersten Ausgleichsgewichtsabschnitts (42D).

8. Verbrennungskraftmaschine (10) nach Anspruch 6 oder 7, wobei:
die vierte Fläche (46) der zweiten Kurbelwange (32) einen vierten inneren Umfangskantenabschnitt (46B), der um das zweite Loch (47) angeordnet ist, und einen vierten eingezogenen Abschnitt (46C), der in einer entgegengesetzten Seite des dritten eingezogenen Abschnitts (45C) der dritten Fläche (45) angeordnet und im Verhältnis zu dem vierten inneren Umfangskantenabschnitt (46B) eingezogen ist, einschließt, und
eine in Axialrichtung mittlere Position (L2) der zweiten Kurbelwange (32) zwischen dem dritten eingezogenen Abschnitt (45C) und dem vierten eingezogenen Abschnitt (46C) angeordnet ist.

9. Reitsitzfahrzeug (1), das eine Verbrennungskraftmaschine (10) nach einem der Ansprüche 1 bis 8 umfasst.

## Revendications

1. Moteur à combustion interne (10) comprenant :
un piston alternatif (18), une bielle (16) raccordée au piston (18), et un vilebrequin (17) raccordé à la bielle (16) ;
le vilebrequin (17) comprenant :
un premier bras de vilebrequin (31) comportant une première surface (41), une deuxième surface (42) opposée à la première surface (41), et un premier orifice (43) menant de la première surface (41) à la deuxième surface (42) ;
un premier arbre prolongé (37) faisant saillie à partir du centre de rotation (31c) du premier bras de vilebrequin (31) par rapport à la première surface (41) ; et
un maneton de vilebrequin (50) monté à pression dans le premier orifice (43), en faisant saillie à partir de la deuxième surface (42) du premier bras de vilebrequin (31) et en étant raccordé à la bielle (16),
dans lequel :
la première surface (41) du premier bras de vilebrequin (31) comporte une première partie de bord périphérique intérieur (41B) située autour du premier orifice (43), et une première partie en creux (41C) renfoncée par rapport à la première partie de bord périphérique intérieur (41B) ;
la deuxième surface (42) du premier bras de vilebrequin (31) comporte une première partie de masse d'équilibrage (42D) prévue à l'opposé du premier orifice (43) par rapport au centre de rotation (31c) du premier bras de vilebrequin (31) en faisant saillie à partir de la deuxième surface (42) ; et
lorsque le sens selon lequel le premier orifice (43) est situé par rapport au centre de rotation (31c) du premier bras de vilebrequin (31) est défini comme un sens orienté vers le haut ou premier sens et le sens selon lequel la première partie de masse d'équilibrage (42D) est située par rapport au centre de rotation (31c) du premier bras de vilebrequin (31) est défini comme un sens orienté vers le bas ou deuxième sens, alors une extrémité supérieure (41Ct) de la première partie en creux (41C) est située vers le haut par rapport à une extrémité inférieure (43b) du premier orifice (43) ou plus à distance du centre de rotation (31c) du premier bras de vilebrequin (31) dans le premier sens que ne l'est cette dernière, et une extrémité inférieure (41Cb) de la première partie en creux (41C) est située vers le bas par rapport à l'extrémité inférieure (43b) du premier orifice (43) ou plus à distance du centre de rotation (31c) du premier bras de vilebrequin (31) dans le deuxième sens que ne l'est cette dernière.

2. Moteur à combustion interne (10) selon la revendication 1, dans lequel, selon une coupe transversale du premier bras de vilebrequin (31) parallèle à une coupe transversale passant par son centre de rotation (31c) et le centre (43c) du premier orifice (43), une extrémité inférieure (41Cs) de la première partie en creux (41C) est située à la même hauteur ou à la même distance du centre de rotation (31c) du premier bras de vilebrequin (31) dans le deuxième sens qu'une extrémité supérieure (42Ds) de la première partie de masse d'équilibrage (42D).

3. Moteur à combustion interne (10) selon la revendication 1 ou 2, dans lequel l'extrémité supérieure (41Ct) de la première partie en creux (41C) est située vers le haut par rapport au centre (43c) du premier orifice (43) ou plus à distance du centre de rotation (31c) du premier bras de vilebrequin (31) dans le premier sens que ne l'est ce dernier.

4. Moteur à combustion interne (10) selon l'une quelconque des revendications 1 à 3, dans lequel :
la deuxième surface (42) du premier bras de vilebrequin (31) comporte une deuxième partie de bord périphérique intérieur (42B) située autour du premier orifice (43) et une seconde partie en creux (42C) située dans un côté opposé de la première partie en creux (41C) de la première surface (41) et renfoncée par rapport à la deuxième partie de bord périphérique intérieur (42B) ; et
une position axialement médiane (L1) du premier bras de vilebrequin (31) est située entre la première partie en creux (41C) et la seconde partie en creux (42C).

5. Moteur à combustion interne (10) selon l'une quelconque des revendications 1 à 4, dans lequel :
la première surface (41) du premier bras de vilebrequin (31) comporte une première partie de bord périphérique extérieur (41A) située au niveau d'un bord périphérique extérieur du premier bras de vilebrequin (31) ; et la partie de bord périphérique intérieur (41B) est renfoncée par rapport à la partie de bord périphérique extérieur (41A).

6. Moteur à combustion interne (10) selon l'une quelconque des revendications 1 à 5, dans lequel :
le vilebrequin (17) comprend :
un second bras de vilebrequin (32) comportant une troisième surface (45), une quatrième surface (46) constituant une surface opposée à la troisième surface (45), et un second trou (47) menant de la troisième surface (45) à la quatrième surface (46), le second bras de vilebrequin (32) étant disposé de manière que la quatrième surface (46) soit en vis-à-vis de la deuxième surface (42) du premier bras de vilebrequin (31) ; et
un second arbre prolongé (38) faisant saillie à partir du centre de rotation (32c) du second bras de vilebrequin (32) par rapport à la troisième surface (45), et dans lequel :
le maneton de vilebrequin (50) est monté à pression dans le second trou (47) en faisant saillie à partir de la quatrième surface (46) du second bras de vilebrequin (32) ;
la troisième surface (45) du second bras de vilebrequin (32) comporte une deuxième partie de bord périphérique extérieur (45A) située au niveau d'un bord périphérique extérieur du second bras de vilebrequin (32), une troisième partie de bord périphérique intérieur (45B) située autour du second trou (47) et renfoncée par rapport à la deuxième partie de bord périphérique extérieur (45A), et une troisième partie en creux (45C) renfoncée par rapport à la troisième partie de bord périphérique intérieur (45B) ;
la quatrième surface (46) du second bras de vilebrequin (32) comporte une seconde partie de masse d'équilibrage (46D) prévue à l'opposé du second trou (47) par rapport au centre de rotation (32c) du second bras de vilebrequin (32) en faisant saillie à partir de la quatrième surface (46) ;
un filtre annulaire (49) est prévu radialement vers l'intérieur de la deuxième partie de bord périphérique extérieur (45A) du second bras de vilebrequin (32) ; et
une extrémité supérieure (45Ct) de la troisième partie en creux (45C) est située vers le haut par rapport à une extrémité inférieure (47b) du second trou (47) ou plus à distance du centre de rotation (32c) du second bras de vilebrequin (32) dans le premier sens que ne l'est cette dernière, et une extrémité inférieure (45Cb) de la troisième partie en creux (45C) est située vers le bas par rapport à l'extrémité inférieure (47b) du second trou (47) ou plus à distance du centre de rotation (32c) du second bras de vilebrequin (32) dans le deuxième sens que ne l'est cette dernière.

7. Moteur à combustion interne (10) selon la revendication 6, dans lequel, selon une coupe transversale du second bras de vilebrequin (32) parallèle à une coupe transversale passant par son centre de rotation (32c) et le centre (47c) du second trou (47), une extrémité supérieure (46Ds) de la seconde partie de masse d'équilibrage (46D) est située vers le haut par rapport à l'extrémité supérieure (42Ds) de la première partie de masse d'équilibrage (42D) ou plus à distance du centre de rotation (32c) du second bras de vilebrequin (32) dans le premier sens que ne l'est cette dernière.

8. Moteur à combustion interne (10) selon les revendications 6 ou 7, dans lequel :
la quatrième surface (46) du second bras de vilebrequin (32) comporte une quatrième partie de bord périphérique intérieur (46B) située autour du second trou (47), et une quatrième partie en creux (46C) située dans un côté opposé de la troisième partie en creux (45C) de la troisième surface (45) et renfoncée par rapport à la quatrième partie de bord périphérique intérieur (46B) ; et
une position axialement médiane (L2) du second bras de vilebrequin (32) est située entre la troisième partie en creux (45C) et la quatrième partie en creux (46C).

9. Véhicule à enfourcher (1) comprenant un moteur à combustion interne (10) selon l'une quelconque des revendications 1 à 8.
